# FASCICULE DE BREVET EUROPEEN

(11) **EP 3 804 920 B1**
(45) Date de publication et mention de la délivrance du brevet: **03.12.2025**
(21) Numéro de dépôt: 20200339.8
(22) Date de dépôt: 06.10.2020
(51) Int. Cl.: B25J 13/08, B25J 9/16, B25J 9/00, B25J 15/00, B25J 13/02

(54) **DISPOSITIF COLLABORATIF À PILOTAGE OPTIMISÉ**
KOLLABORATIVE VORRICHTUNG MIT OPTIMIERTER STEUERUNG
COLLABORATIVE DEVICE WITH OPTIMISED CONTROL

(30) Priorité: 08.10.2019 FR 1911145
(43) Date de publication de la demande: 14.04.2021
(73) Titulaire: BA Robotics, 35740 Pacé (FR)
(72) Inventeur: DEVY, Roland, 37300 Joue-les-Tours (FR); FOUCAULT, Paul, 37500 Seuilly (FR)
(74) Mandataire: Ermeneux, Bertrand

(56) Documents cités:
- EP-A1- 1 724 072
- JP-A- H0 976 183
- US-A- 4 298 308
- US-B2- 10 260 970

## Description

Le domaine de l'invention est celui de la conception et de la fabrication de dispositifs de travail collaboratif.

Plus précisément, l'invention concerne un dispositif de soudage collaboratif.

Par dispositif de travail collaboratif, il est entendu un dispositif comprenant un robot qui évolue au milieu d'humains. Un tel dispositif collaboratif peut notamment adopter un mode automatique dans lequel il est autonome et travaille sans intervention de l'homme, et un mode manuel dans lequel un technicien utilise le dispositif. Dans le mode manuel, le technicien peut notamment collaborer avec le robot notamment pour positionner des pièces avant que le robot n'agisse sur lesdites pièces.

De tels dispositifs collaboratifs sont largement connus, par exemple par US10260970B2, US4298308A, JPH0976183A, EP1724072A1. Ainsi, grâce à l'avènement de la réalité virtuelle et de la robotique, il est possible de remplacer des tâches fastidieuses pour des humains par des tâches réalisées de manière automatique par des robots.

Pour cela, les robots doivent apprendre les gestes qu'ils doivent effectuer en remplacement des gestes humains.

Un tel apprentissage est généralement réalisé de manière numérique, c'est-à-dire que la trajectoire ou les déplacements du robot sont créés de manière artificielle par un ordinateur.

Le technicien crée alors, via un logiciel par exemple, un programme de trajectoire du bras pour que celui-ci réalise les tâches qu'il a à effectuer.

Le programme peut être généré soit par assemblage d'une succession de déplacements et d'actions à réaliser depuis une base de données, soit par un programme de traitement qui génère alors lui-même les trajectoires à effectuer par le robot lorsque le technicien a défini le résultat final qu'il souhaitait obtenir.

Cette façon de faire présente certains inconvénients.

Premièrement, cette méthode peut demander du temps de traitement, notamment lorsque le programme est réalisé à partir d'une succession de trajectoires et d'actions à effectuer par le robot, chaque trajectoire et action devant être déterminée par le technicien au préalable.

Avant de définir le programme, le technicien doit donc prendre le temps pour identifier l'enchainement le plus adapté pour la réalisation de sa ou ses pièces.

Deuxièmement, certaines trajectoires peuvent ne pas être optimisées en vue d'une trajectoire future. En effet, les robots ne réalisent que ce qui leur est demandé. Par conséquent, contrairement à l'Homme, le robot réalise les tâches de manière séquentielle, c'est-à-dire les unes à la suite des autres, sans anticiper une tâche future.

Au contraire, un Homme cherchera de manière générale à utiliser une trajectoire optimisée en vue de se faciliter la vie.

Dès lors, une trajectoire réalisée par ordinateur pour le pilotage des robots n'est pas optimisée et peut présenter certains défauts.

Dans le cas d'un bras de soudure par exemple, l'optimisation des trajectoires revêt un caractère important.

En effet, pour obtenir certaines soudures dans des endroits difficiles d'accès par exemple, la torche de soudure doit avoir une inclinaison bien déterminée.

Une telle inclinaison peut être difficile à calculer ou à déterminer par le technicien en vue de le faire reproduire par le robot.

Bien que cela reste possible, l'optimisation des trajectoires est généralement pour la réalisation de pièces en grande série, comme par exemple dans l'industrie automobile pour laquelle la fabrication de pièces identiques peut être réalisée pendant plusieurs années.

En effet, une telle optimisation demande un temps de mise en œuvre important que les opérateurs ne possèdent pas, ou quasiment, pour la réalisation de pièces en petite ou moyenne série.

L'invention a notamment pour objectif de pallier les inconvénients de l'art antérieur.

Plus précisément, l'invention a pour objectif de proposer un dispositif collaboratif qui permette à un technicien d'enregistrer une trajectoire pour le bras robotisé de manière simple.

L'invention a également pour objectif de fournir un tel dispositif qui soit aisé de manipulation pour le technicien.

L'invention a en outre pour objectif de fournir un tel dispositif qui assure une trajectoire et une orientation optimisées du robot et de ses outils.

Ces objectifs, ainsi que d'autres qui apparaitront par la suite, sont atteints grâce à l'invention qui a pour objet un dispositif collaboratif selon la revendication 1.

Ce dispositif permet ainsi à un technicien de créer une trajectoire à enregistrer par l'unité informatique pour générer un programme automatisé du bras robotisé.

En outre, la manipulation de l'outil par le technicien est facilitée grâce au mode d'apprentissage et notamment à la traduction des couples subis et la génération des consignes d'atténuation.

En effet, ces consignes d'atténuation permettent de piloter les moteurs du bras robotisé pour effectuer un mouvement inverse à l'effort exercé par le technicien.

Autrement dit, lorsque le technicien déplace l'outil, les consignes d'atténuation permettent de piloter les moteurs du bras robotisé de sorte que ceux-ci n'agissent pas comme un frein au déplacement de l'outil, ceci correspondant à l'effet de frein des moteurs. Dès lors, le technicien ne ressent pas le bras, ou quasiment, lorsqu'il déplace l'outil. Les moteurs du bras robotisé sont donc pilotés comme un accompagnement du bras robotisé, c'est-à-dire que les moteurs vont dans le sens imposé par l'opérateur.

En outre, grâce au capteur, le programme généré permet de recréer fidèlement le déplacement de l'outil par le technicien lorsque le dispositif est utilisé de manière automatique.

Avantageusement, dans le mode automatique, l'unité informatique est configurée pour :
- générer un programme de travail comprenant au moins une trajectoire de l'outil à partir des données reçues du capteur et/ou de positions des moteurs du bras robotisé, dans le mode d'apprentissage ;
- piloter le ou lesdits moteurs du bras robotisé avec ledit programme de travail.

Dans ce mode automatique, le bras robotisé peut recréer la trajectoire réalisée manuellement par le technicien, cela permettant de créer, à la chaîne, des phases de travail identiques.

Selon une première forme de réalisation, l'unité informatique est configurée pour exécuter une reproduction du déplacement de l'outil à une vitesse identique à celle appliquée par le technicien dans le mode d'apprentissage.

Dans ce cas, le déplacement de l'outil dans le mode automatique est strictement identique au déplacement de l'outil réalisé par le technicien dans le mode d'apprentissage.

Cela permet notamment de conserver une vitesse appropriée lorsque l'outil est actif, une telle vitesse pouvant avoir été souhaitée par les techniciens notamment pour une raison de qualité de travail.

Selon une deuxième forme de réalisation, l'unité informatique est configurée pour lisser la vitesse de déplacement de l'outil par le bras robotisé selon une vitesse cible constante.

Cela permet notamment de pouvoir atteindre une cadence de production souhaitée lors de la répétition des trajectoires par le bras robotisé.

Par ailleurs, il est possible de savoir à tout instant à quelle position se trouvera l'outil ou, au contraire, de pouvoir déterminer une position à laquelle doit se trouver l'outil à un instant souhaité par les techniciens. Cela permet également de réaliser un contrôle de qualité sans coupure de la production.

Selon une troisième forme de réalisation, l'unité informatique est configurée pour augmenter la vitesse de déplacement de l'outil lorsqu'il est dans un état inactif.

Ainsi, il est possible d'augmenter les cadences de fabrication du dispositif.

En effet, lorsque l'outil est actif, certaines conditions, notamment de vitesse de déplacement, doivent être respectées pour assurer la qualité du travail effectué par l'outil et éviter tout danger pour les techniciens qui évoluent à proximité du bras robotisé.

En revanche, lorsque l'outil est inactif, les temps déplacements de l'outil, notamment pour revenir à un point de départ ou pour changer de zone d'action, peuvent être raccourcis de sorte à réduire le temps de production et donc augmenter les cadences de production.

De préférence, l'unité informatique est configurée pour lisser les trajectoires du programme de travail.

Ainsi, il est possible d'augmenter encore la qualité de production du dispositif.

Lors de l'apprentissage, le technicien qui manipule l'outil peut, de manière involontaire, générer des perturbations dans ses déplacements, notamment lorsqu'il doit prendre plusieurs appuis successifs afin de stabiliser l'outil en activité.

Le lissage des trajectoires permet donc de corriger d'éventuelles secousses ou soubresauts liés au changement de position du technicien lors de la phase d'apprentissage.

Par ailleurs, certaines positions pouvant être difficiles à tenir pour un technicien, celui-ci peut trembler ou hésiter lorsqu'il manipule l'outil. Le lissage des trajectoires permet donc de supprimer ces tremblements pour améliorer encore la qualité de réalisation par le bras robotisé.

Selon un mode de réalisation particulier, l'outil est une torche de soudage.

Cet outil, qui est généralement manipulé manuellement par un technicien, peut permettre de réaliser des soudures précises et rapides de manière automatisée grâce à la présence du bras robotisé.

Avantageusement, la torche de soudage présente un tube à l'intérieur duquel un guide de fil de soudage est inséré.

Cela permet de pouvoir changer de manière rapide et efficace soit la torche de soudage en fonction des caractéristiques ou besoins de production, mais également le type de fil de soudage, toujours en fonction des caractéristiques de production.

Préférentiellement, le guide de fil est inséré avec jeu dans le tube.

Cela permet d'éviter tout contact entre le guide de fil et la torche, si bien qu'un déplacement inopiné ou involontaire de la torche, une résonnance ou vibration de cette dernière, n'a pas de conséquence sur la qualité de la soudure effectuée.

Selon un mode de réalisation préféré, la torche de soudage comprend une poignée prolongée à l'une de ses extrémités par le tube, la deuxième partie de l'articulation étant montée à la jonction entre la poignée et le tube.

Une telle caractéristique permet d'offrir une bonne prise en main et une facilité d'utilisation de la torche pour le technicien. En effet, de manière conventionnelle, un technicien se saisit d'une torche par la poignée et peut éventuellement guider le déplacement de la torche en utilisant sa main libre comme guide sur lequel vient s'appuyer le tube.

Dans ce cas, l'utilisateur utilise sa main libre comme guide sur lequel prend appui le tube, la position de la deuxième partie de la liaison ou de l'articulation permettant alors une manoeuvre aisée puisque la manipulation et la préhension de la torche de soudage par le technicien ne diffèrent pas, ou quasiment, de la préhension et de la manipulation d'une torche de manière habituelle, c'est-à-dire hors du dispositif collaboratif.

De préférence, la torche de soudage comprend au moins un bouton à double contact, dont :
- un premier contact pour autoriser une soudure ;
- un deuxième contact pour commander l'unité informatique et générer le programme de travail.

Ainsi, le technicien peut continuer à utiliser la torche de soudage de manière totalement manuelle, c'est-à-dire comme si la torche n'était pas reliée au bras robotisé, et réaliser dans ce cas plusieurs passes d'essai avant de créer un programme de travail.

Lorsqu'une utilisation et un résultat de soudure sont satisfaisants pour le technicien, l'unité informatique peut, grâce au deuxième contact, générer de manière automatique, le programme de travail du dispositif, qui sera reproduit ensuite par le bras robotisé.

Avantageusement, le dispositif comprend un panneau de réglages de paramètres de l'outil, l'unité informatique étant couplée au panneau de réglages et configurée pour prendre en compte des données du panneau de réglage et générer les consignes d'atténuation et le programme de travail.

Grâce aux paramètres de fabrication, c'est-à-dire aux données du panneau de réglage, l'unité informatique peut réaliser les opérations de lissage, d'augmentation de la vitesse ou de diminution de la vitesse de déplacement de l'outil, ou encore les consignes d'atténuation sans que cela n'affecte la qualité de production. En effet, les différents matériaux à souder ou les différents types de fils peuvent demander des conditions particulières de réalisation de la soudure.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés, parmi lesquels :
- la figure 1 est une vue en perspective d'un dispositif collaboratif selon l'invention, comprenant un bras robotisé et une torche de soudage ;
- la figure 2 est une vue de côté d'un dispositif collaboratif selon l'invention, montrant une zone de travail de l'outil ;
- la figure 3 est une vue de détail de la torche de soudage du dispositif collaboratif selon l'invention.

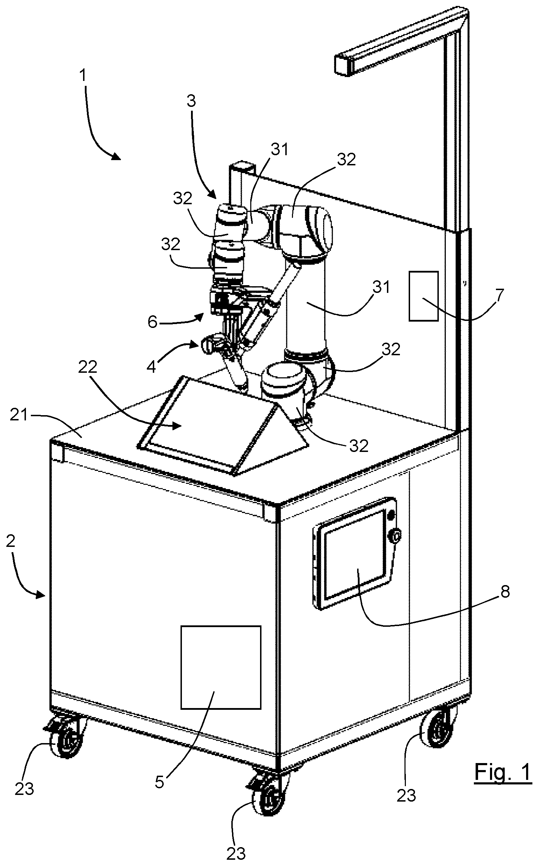

La figure 1 illustre un dispositif 1 collaboratif selon l'invention.

Par dispositif collaboratif, il est entendu un dispositif comprenant un robot qui évolue au milieu d'humains. Un tel dispositif collaboratif peut notamment adopter un mode automatique dans lequel il est autonome et travaille sans intervention de l'homme, et un mode manuel dans lequel un technicien utilise le dispositif. Dans le mode manuel, le technicien peut collaborer avec le robot pour positionner des pièces avant que le robot n'agisse sur lesdites pièces.

Ce dispositif 1 comprend :
- un châssis 2 ;
- un bras 3 robotisé monté sur le châssis 2 ;
- un outil 4 solidarisé à une extrémité libre du bras 3 robotisé ;
- une unité informatique 5 reliée au bras 3 robotisé pour transmettre des consignes de pilotage au bras 3 robotisé.

Le dispositif 1 peut adopter :
- un mode d'apprentissage dans lequel l'outil 4 est déplacé par un technicien ;
- un mode automatique dans lequel le bras 3 robotisé déplace l'outil 4, le bras 3 robotisé étant piloté par l'unité informatique 5, tel qu'expliqué ci-après.

En référence à la figure 1, le châssis 2 se présente sous la forme d'un caisson définissant un plan de travail 21 sur lequel est monté un pupitre 22 de soudage.

Le pupitre 22 est un élément mobile qui peut être désolidarisé du plan de travail 21 selon le besoin, ce pupitre 22 étant adaptable aux différentes pièces à réaliser.

Le châssis 2 est avantageusement mobile et, pour cela, comprend quatre roulettes 23 pour pouvoir être déplacé dans un atelier.

Le bras 3 robotisé est solidarisé au châssis 2 par une première extrémité et comprend plusieurs segments 31 reliés les uns aux autres par des moteurs 32.

Les moteurs 32 forment ainsi des coudes entre chacun des segments 31 permettant de faire adopter au bras 3 robotisé plusieurs positions.

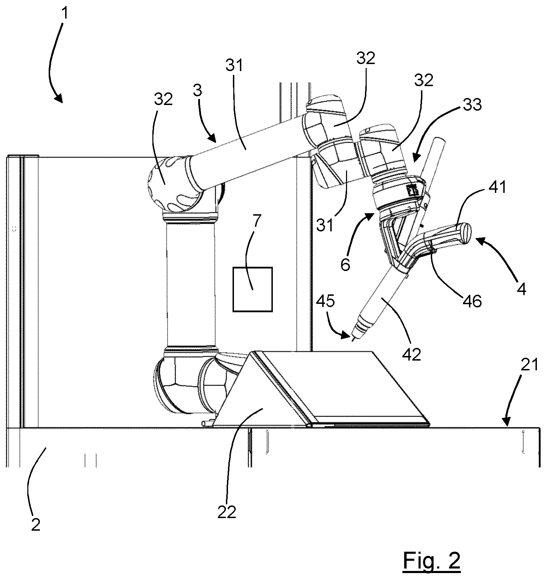

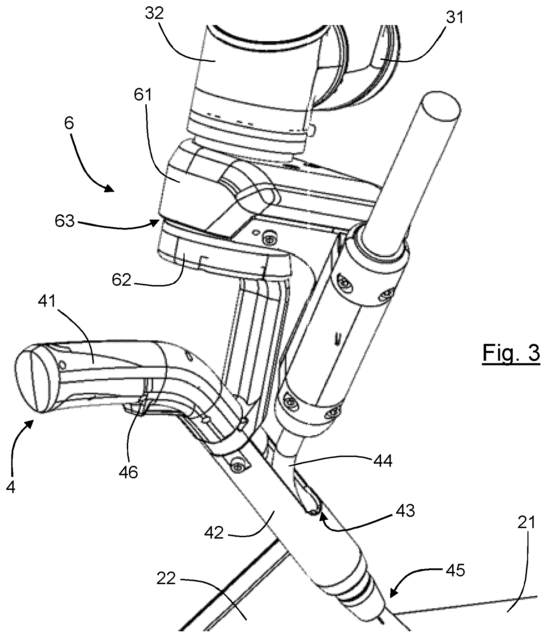

En référence aux figures 2 et 3, le bras 3 robotisé présente également une extrémité libre 33 au bout de laquelle ou à laquelle l'outil 4 est solidarisé.

Plus particulièrement, tel qu'on le voit sur les figures 1, 2 et 3, l'outil 4 est une torche de soudage qui est montée sur le bras 3 robotisé.

Pour assurer le montage de l'outil 4 sur le bras robotisé, le dispositif comprend également une articulation 6 intercalée entre le bras 3 robotisé et l'outil 4.

Cette articulation 6, telle qu'on la voit plus en détails sur la figure 3, présente :
- une première partie 61 solidaire du bras 3 robotisé ;
- une deuxième partie 62 solidaire de l'outil 4 ;
- une liaison souple 63 intercalée entre la première partie 61 et la deuxième partie 62.

La liaison souple 63 permet, en se déformant, d'autoriser des mouvements de l'outil 4 par rapport au bras 3 robotisé.

Tel qu'illustré sur la figure 3, le dispositif 1 comprend également un capteur 7 paramétré pour détecter des forces exercées sur la liaison souple 63 lorsque l'outil 4 est déplacé par un technicien.

Selon le mode de réalisation illustré sur la figure 1 et la figure 2 notamment, le capteur est solidaire du châssis 2. En variante, le capteur 7 pourrait être intégré à l'articulation 6, et notamment logé dans la liaison souple 63.

Avantageusement, le capteur 7 est solidaire de l'outil 4 et est situé sous l'articulation 6.

Le capteur 7 est relié à l'unité informatique pour permettre à cette dernière d'acquérir les données du capteur et les traiter en vue du pilotage du bras robotisé.

Plus précisément, l'unité informatique 5 est configurée pour :
- recevoir des données du capteur 7 ;
- traduire lesdites données en couples subis au niveau dudit ou desdits moteurs 32 du bras 3 robotisé ;
- générer des consignes d'atténuation des couples subis ;
- piloter ledit ou lesdits moteurs 32 du bras 3 robotisé avec les consignes d'atténuation.

En d'autres termes, l'unité informatique 5 reçoit les données de déformation de la liaison souple 63 de l'articulation 6 puis les traite et les transforme en des consignes de pilotage du bras 3 robotisé.

Tel qu'illustré par la figure 1, le dispositif 1 comprend également un panneau 8 de réglage de paramètres de l'outil 4.

Ce panneau 8 peut par exemple prendre la forme d'une tablette tactile solidaire ou non du châssis 2 permettant à un technicien de renseigner les différents paramètres de soudage, tels que par exemple une avance du fil de soudage ou une quantité de gaz à utiliser.

En référence à la figure 3, la torche de soudage, c'est-à-dire l'outil 4, comprend une poignée 41 prolongée à l'une de ses extrémités par tube 42 creux.

Le tube 42 creux présente une ouverture 43 par laquelle un guide 44 de fil de soudage est inséré pour déboucher à une extrémité 45 ouverte du tube 42 creux, l'extrémité 45 ouverte étant opposée à la poignée 41 de la torche de soudage.

Avantageusement, le guide 44 de fil est monté avec jeu à l'intérieur du tube 42 creux pour permettre, en cas de manipulation involontaire ou de vibration de la torche de soudage, que la position du fil lors du soudage ne soit pas altérée et que la qualité du soudage soit préservée.

La torche de soudage comprend également au moins un bouton 46 permettant au technicien d'interagir soit avec la torche en elle-même pour autoriser le soudage, soit avec l'unité informatique 5.

Ce bouton 46 est un bouton à double contact dont :
- un premier contact pour autoriser la soudure ;
- un deuxième contact pour commander l'unité informatique 5.

Plus particulièrement, le deuxième contact permet, en commandant l'unité informatique 5, de générer le programme de travail du bras 3 robotisé.

En fonctionnement, le technicien choisit premièrement d'utiliser le dispositif 1 en mode totalement manuel, c'est-à-dire qu'il réalise les soudures lui-même, et que seul le premier contact du bouton 46 de la torche de soudage est utilisé.

L'utilisateur déplace alors la torche de soudage à sa guise et la positionne, puis actionne le bouton 46, le temps nécessaire, pour provoquer la soudure et réaliser l'assemblage de deux pièces entre elles.

L'utilisateur peut également sélectionner un mode d'apprentissage du dispositif pour lui permettre de répéter, via le mode automatique, une opération de soudure souhaitée.

Pour cela, le technicien utilise le mode d'apprentissage et déplace la torche puis actionne le premier contact du bouton 46 afin de réaliser la ou les soudures qu'il désire. L'utilisateur peut réaliser une soudure continue en maintenant le bouton 46 sur le premier contact lors du déplacement de la torche.

Le technicien peut recommencer sa manipulation autant de fois qu'il le désire, jusqu'à obtenir le résultat de la qualité qu'il souhaite.

Dans le mode manuel ou dans le mode d'apprentissage, l'unité informatique utilise alors les données du capteur 7, c'est-à-dire des données de déformation de la liaison souple 63 due à la manipulation de la torche par l'utilisateur.

L'unité informatique 5 traduit alors ces données en couples subis au niveau dudit ou desdits moteurs 32 du bras 3 robotisé.

L'unité informatique 5 génère alors des consignes d'atténuation des couples subis qu'elle renvoie aux moteurs 32 du bras 3 robotisé pour piloter ces derniers.

L'envoie des consignes d'atténuation est instantané, c'est à dire que les moteurs du bras 3 robotisé sont pilotés dès le déplacement de ce dernier par le technicien.

Cela permet ainsi de libérer les moteurs 32 d'un couple qu'ils pourraient exercer à l'encontre des déplacements souhaités par le technicien.

En d'autres termes, sans le pilotage des moteurs 32 par l'unité informatique, lorsque le technicien déplace la torche de soudage, le déplacement est freiné ou, à tout le moins ralenti, par le bras 3 robotisé, et notamment par les moteurs 32 du bras 3 robotisé qui présentent un couple résistant.

Grâce au pilotage immédiat, le bras 3 robotisé devient alors transparent pour le technicien et il ne forme aucune gêne, ou quasiment, lors du déplacement de la torche de soudage. L'effet de frein des moteurs 32 est limité.

Par pilotage immédiat, on entend que le bras 3 robotisé est piloté instantanément, dès que le capteur 7 détecte une déformation de liaison souple 63 de l'articulation 6.

Pour réaliser une soudure automatiquement, l'utilisateur contrôle le dispositif 1 pour le positionner en position automatique.

Grâce au deuxième contact du bouton 46, les différentes données reçues du capteur 7 et/ou des moteurs 32 du bras 3 robotisé, dans le mode d'apprentissage, sont alors également traduites par l'unité informatique pour l'exécution en mode automatique des déplacements du bras 3 robotisé.

En effet, par la sollicitation du deuxième contact du bouton 46, l'unité informatique 5 est également configurée pour générer le programme de travail comprenant au moins une trajectoire de l'outil 4, et piloter le ou les moteurs 32 du bras 3 robotisé avec ledit programme de travail.

Plus précisément, les différents déplacements exercés par le technicien durant la phase d'apprentissage peuvent être restitués par le bras 3 pour réaliser de manière précise le même déplacement mais, cette fois, de manière automatique.

Pour cela, l'unité informatique 5 utilise de préférence la position des moteurs 32 du bras 3 robotisé lorsque le technicien déplace l'outil 4. Bien entendu, en complément et pour plus de précision, les données du capteur 7 peuvent également être utilisées pour générer le programme de travail.

Selon des paramètres de production souhaités par le technicien, l'unité informatique 5 peut également être configurée pour exécuter une reproduction du déplacement de l'outil 4 à une vitesse identique à celle appliquée par le technicien dans le mode d'apprentissage.

Ainsi, si le technicien est un expert dont les réglages et la vitesse de déplacement de la torche sont parfaitement maîtrisés, alors la qualité de la soudure reproduite automatiquement sera identique à celle du technicien.

En revanche, dans le cas d'un technicien débutant par exemple, dont les gestes peuvent être tremblants ou mal assurés, l'unité informatique 5 peut être paramétrée pour lisser la vitesse de déplacement de l'outil 4 par le bras 3 robotisé selon une vitesse constante, ou encore lisser les trajectoires du programme de travail.

En effet, pour un technicien débutant, une vitesse constante peut ne pas être respectée, rendant alors le cordon de soudure peu esthétique, c'est-à-dire présentant des épaisseurs inconstantes sur sa longueur, mais également, à cause des différences d'épaisseur, des faiblesses de tenue mécanique.

Ces tremblements peuvent être atténués par le lissage des trajectoires pour permettre d'obtenir un cordon de soudure esthétique et qui offre de bonnes garanties de tenue mécanique.

En cas de vitesse ou de conditions de production augmentées, l'unité informatique 5 peut également être configurée pour augmenter la vitesse de déplacement de l'outil 4 lorsque celui-ci est dans un état inactif.

Autrement dit, lorsque l'outil 4, c'est-à-dire la torche de soudage, n'est pas utilisé pour souder deux pièces entre elles, il peut être déplacé de manière plus rapide pour réduire le temps de fabrication.

Cela est notamment utile entre un point de fin de cycle et une position de début de cycle de la torche de soudage.

Le dispositif 1 collaboratif précédemment décrit permet de reproduire les gestes d'un technicien de manière automatique, par apprentissage direct desdits gestes du technicien.

En effet, contrairement à un programme de trajectoire uniquement créé de manière théorique, par exemple par ordinateur, l'utilisation de la trajectoire par la manipulation du technicien permet, outre l'acquisition des différents lieux de soudage, d'obtenir des inclinaisons souhaitées de la torche de soudage permettant de réaliser le cordon de soudure souhaité.

En outre, le pilotage instantané ou en temps réel du bras 3 robotisé durant la phase d'apprentissage permet de ne pas gêner le technicien lorsqu'il déplace la torche de soudage, cela afin de générer un programme de travail le plus fluide possible pour le bras 3 robotisé.

Enfin, lors de l'apprentissage, le bras 3 robotisé ne forme pas une gêne pour le technicien qui peut alors réaliser en toute sérénité, et de manière classique un cordon de soudage.

## Revendications

1. Dispositif (1) collaboratif comprenant :
- un bras (3) robotisé incluant au moins un moteur (32) ;
- un outil (4) solidarisé à une extrémité libre (33) du bras (3) robotisé ;
- une unité informatique (5) reliée au bras (3) robotisé pour transmettre des consignes de pilotage du bras (3) robotisé,
le dispositif (1) pouvant adopter au moins :
- un mode d'apprentissage dans lequel l'outil (4) est déplacé par un technicien, et
- un mode automatique dans lequel le bras robotisé recrée une trajectoire réalisée manuellement par le technicien dans le mode d'apprentissage,
**caractérisé en ce que** le dispositif (1) comprend également une articulation (6) intercalée entre le bras (3) robotisé et l'outil (4), l'articulation ayant :
- une première partie (61) solidaire du bras (3) robotisé ;
- une deuxième partie (62) solidaire de l'outil (4) ;
- une liaison souple (63) intercalée entre la première partie (61) et la deuxième partie (62),
le dispositif (1) intégrant au moins un capteur (7) paramétré pour détecter des forces exercées sur la liaison souple (63) lorsque l'outil (4) est déplacé par le technicien, dans le mode d'apprentissage du dispositif (1),
l'unité informatique (5) étant configurée pour :
- recevoir des données du capteur (7) dans le mode d'apprentissage ;
- traduire lesdites données en couples subis au niveau dudit ou desdits moteurs (32) du bras (3) robotisé dans le mode d'apprentissage ;
- générer des consignes d'atténuation des couples subis,
- piloter ledit ou lesdits moteurs (32) du bras (3) robotisé avec les consignes d'atténuation lorsque l'outil (4) est déplacé par le technicien dans le mode d'apprentissage, pour limiter un effet de frein d'un couple résistant des moteurs (32) à l'encontre du déplacement de l'outil (4) par le technicien dans le mode d'apprentissage.

2. Dispositif (1) selon la revendication 1, **caractérisé en ce que**, dans le mode automatique, l'unité informatique (5) est configurée pour :
- générer un programme de travail comprenant au moins une trajectoire de l'outil (4), à partir des données reçues du capteur (7) et/ou de positions des moteurs (32) du bras (3) robotisé, dans le mode d'apprentissage ;
- piloter ledit ou lesdits moteurs (32) du bras (3) robotisé avec ledit programme de travail.

3. Dispositif (1) selon la revendication précédente, **caractérisé en ce que** l'unité informatique (5) est configurée pour exécuter une reproduction du déplacement de l'outil (4) à une vitesse identique à celle appliquée par le technicien dans le mode d'apprentissage.

4. Dispositif (1) selon la revendication 2, **caractérisé en ce que** l'unité informatique est configurée pour lisser la vitesse de déplacement de l'outil (4) par le bras (3) robotisé selon un vitesse cible constante.

5. Dispositif (1) selon la revendication 2, **caractérisé en ce que** l'unité informatique (5) est configurée pour augmenter la vitesse de déplacement de l'outil (4) lorsque l'outil (4) est dans un état inactif.

6. Dispositif (1) selon l'une quelconque des revendications 2 à 5, **caractérisé en ce que** l'unité informatique (5) est configurée pour lisser les trajectoires du programme de travail.

7. Dispositif (1) selon l'une quelconque des revendications précédentes, **caractérisé en ce que** l'outil (4) est une torche de soudage.

8. Dispositif (1) selon la revendication précédente, **caractérisé en ce que** la torche de soudage présente un tube (42) à l'intérieur duquel un guide (44) de fil de soudage est inséré.

9. Dispositif (1) selon la revendication précédente, **caractérisé en ce que** le guide (44) de fil est inséré avec jeu dans le tube (42).

10. Dispositif (1) selon la revendication 8 ou la revendication 9, **caractérisé en ce que** la torche de soudage comprend une poignée (41) prolongée à l'une de ses extrémités par le tube (42), la deuxième partie (61) de l'articulation (6) étant montée à la jonction entre la poignée (41) et le tube (42).

11. Dispositif (1) selon l'une quelconque des revendications 7 à 10, **caractérisé en ce que** la torche de soudage comprend au moins un bouton (46) à double contact dont :
- un premier contact pour autoriser une soudure ;
- un deuxième contact pour commander l'unité informatique (5) et générer le programme de travail.

12. Dispositif (1) selon l'une quelconque des revendications précédentes, **caractérisé en ce qu'**il comprend un panneau (8) de réglage de paramètres de l'outil (4), l'unité informatique (5) étant couplée au panneau (8) de réglage et configurée pour prendre en compte des données du panneau (8) de réglage et générer les consignes d'atténuation et le programme de travail.

13. Dispositif (1) selon l'une quelconque des revendications précédentes, **caractérisé en ce que** l'unité informatique (5) est également configurée pour générer des consignes d'atténuation des couples subis qu'elle renvoie aux moteurs (32) du bras (3) robotisé pour piloter ces derniers dès que le capteur (7) détecte une déformation de liaison souple (63) lorsque l'outil (4) est déplacé par le technicien dans le mode d'apprentissage.

## Patentansprüche

1. Kollaborative Vorrichtung (1), umfassend:
- einen Roboterarm (3), der mindestens einen Motor (32) einschließt;
- ein Werkzeug (4), das an einem freien Ende (33) des Roboterarms (3) befestigt ist;
- eine Computereinheit (5), die mit dem Roboterarm (3) verbunden ist, zum Übermitteln von Anweisungen zum Steuern des Roboterarms (3),
wobei die Vorrichtung (1) mindestens übernehmen kann:
- einen Lernmodus, in dem das Werkzeug (4) durch einen Techniker bewegt wird, und
- einen automatischen Modus, in dem der Roboterarm einen Bewegungsverlauf nachbildet, der durch den Techniker in dem Lernmodus manuell ausgeführt wird,
**dadurch gekennzeichnet, dass** die Vorrichtung (1) ferner ein Gelenk (6) umfasst, das zwischen dem Roboterarm (3) und dem Werkzeug (4) eingefügt ist, wobei das Gelenk aufweist:
- ein erstes Teil (61), das an dem Roboterarm (3) befestigt ist;
- ein zweites Teil (62), das an dem Werkzeug (4) befestigt ist;
- eine flexible Verbindung (63), die zwischen dem ersten Teil (61) und dem zweiten Teil (62) eingefügt ist,
wobei die Vorrichtung (1) mindestens einen Sensor (7) integriert, der zum Erfassen von Kräften konfiguriert ist, die auf die flexible Verbindung (63) ausgeübt werden, wenn das Werkzeug (4) durch den Techniker in dem Lernmodus der Vorrichtung (1) bewegt wird,
wobei die Computereinheit (5) konfiguriert ist zum:
- Empfangen von Daten von dem Sensor (7) in dem Lernmodus;
- Umsetzen der Daten in Drehmomente, die an dem oder den Motor(en) (32) des Roboterarms (3) in dem Lernmodus erfahren werden;
- Erzeugen von Anweisungen zum Vermindern der erfahrenen Drehmomente,
- Steuern des Motors oder der Motoren (32) des Roboterarms (3) mit den Verminderungsanweisungen, wenn das Werkzeug (4) durch den Techniker in dem Lernmodus bewegt wird, zum Beschränken einer Bremswirkung eines Widerstandsdrehmoments der Motoren (32) gegen die Bewegung des Werkzeugs (4) durch den Techniker in dem Lernmodus.

2. Vorrichtung (1) nach Anspruch 1, **dadurch gekennzeichnet, dass** in dem automatischen Modus die Computereinheit (5) konfiguriert ist zum:
- Erzeugen eines Arbeitsprogramms, umfassend mindestens einen Bewegungsverlauf des Werkzeugs (4), aus den Daten, die von dem Sensor (7) empfangen werden, und/oder aus den Positionen der Motoren (32) des Roboterarms (3) in dem Lernmodus;
- Steuern des Motors oder der Motoren (32) des Roboterarms (3) mit dem Arbeitsprogramm.

3. Vorrichtung (1) nach dem vorstehenden Anspruch,
**dadurch gekennzeichnet, dass** die Computereinheit (5) zum Ausführen einer Nachahmung der Bewegung des Werkzeugs (4) mit einer Geschwindigkeit konfiguriert ist, die identisch zu derjenigen ist, die durch den Techniker in dem Lernmodus angewendet wird.

4. Vorrichtung (1) nach Anspruch 2, **dadurch gekennzeichnet, dass** die Computereinheit zum Glätten der Bewegungsgeschwindigkeit des Werkzeugs (4) durch den Roboterarm (3) entsprechend einer konstanten Zielgeschwindigkeit konfiguriert ist.

5. Vorrichtung (1) nach Anspruch 2, **dadurch gekennzeichnet, dass** die Computereinheit (5) zum Erhöhen der Bewegungsgeschwindigkeit des Werkzeugs (4) konfiguriert ist, wenn sich das Werkzeug (4) in einem inaktiven Zustand befindet.

6. Vorrichtung (1) nach einem der Ansprüche 2 bis 5,
**dadurch gekennzeichnet, dass** die Computereinheit (5) zum Glätten der Bewegungsverläufe des Arbeitsprogramms konfiguriert ist.

7. Vorrichtung (1) nach einem der vorstehenden Ansprüche,
**dadurch gekennzeichnet, dass** das Werkzeug (4) ein Schweißbrenner ist.

8. Vorrichtung (1) nach dem vorstehenden Anspruch,
**dadurch gekennzeichnet, dass** der Schweißbrenner ein Rohr (42) aufweist, in dessen Inneres eine Schweißdrahtführung (44) eingeschoben ist.

9. Vorrichtung (1) nach dem vorstehenden Anspruch,
**dadurch gekennzeichnet, dass** die Drahtführung (44) mit Spiel in das Rohr (42) eingeschoben ist.

10. Vorrichtung (1) nach Anspruch 8 oder 9, **dadurch gekennzeichnet, dass** der Schweißbrenner einen Griff (41) umfasst, der an einem seiner Enden durch das Rohr (42) verlängert ist, wobei der zweite Teil (61) des Gelenks (6) an der Verbindungsstelle zwischen dem Griff (41) und dem Rohr (42) montiert ist.

11. Vorrichtung (1) nach einem der Ansprüche 7 bis 10,
**dadurch gekennzeichnet, dass** der Schweißbrenner mindestens einen Doppelkontaktknopf (46) umfasst, darunter:
- einen ersten Kontakt zum Genehmigen einer Schweißung;
- einen zweiten Kontakt zum Betätigen der Computereinheit (5) und Erzeugen des Arbeitsprogramms.

12. Vorrichtung (1) nach einem der vorstehenden Ansprüche,
**dadurch gekennzeichnet, dass** es ein Bedienfeld (8) zum Einstellen von Parametern des Werkzeugs (4) umfasst, wobei die Computereinheit (5) mit dem Einstellbedienfeld (8) gekoppelt ist und zum Berücksichtigen von Daten von dem Einstellbedienfeld (8) und Erzeugen der Verminderungsanweisungen und des Arbeitsprogramms konfiguriert ist.

13. Vorrichtung (1) nach einem der vorstehenden Ansprüche,
**dadurch gekennzeichnet, dass** die Computereinheit (5) ferner zum Erzeugen von Anweisungen zum Vermindern der erfahrenen Drehmomente konfiguriert ist, die sie an die Motoren (32) des Roboterarms (3) zum Steuern der letzteren zurücksendet, sobald der Sensor (7) eine Verformung der flexiblen Verbindung (63) erfasst, wenn das Werkzeug (4) durch den Techniker in dem Lernmodus bewegt wird.

## Claims

1. Collaborative device (1) comprising:
- a robotic arm (3) including at least one motor (32);
- a tool (4) secured to a free end (33) of the robotic arm (3);
- a computer unit (5) connected to the robotic arm (3) in order to transmit instructions for controlling the robotic arm (3),
the device (1) being capable of adopting at least:
- a learning mode in which the tool (4) is moved by a technician, and
- an automatic mode in which the robotic arm recreates a trajectory set manually by the technician in the learning mode,
**characterized in that** the device (1) also comprises a joint (6) positioned between the robotic arm (3) and the tool (4), the joint having:
- a first part (61) secured to the robotic arm (3);
- a second part (62) secured to the tool (4);
- a flexible connection (63) positioned between the first part (61) and the second part (62),
the device (1) incorporating at least one sensor (7) parameterized to detect forces exerted on the flexible connection (63) when the tool (4) is moved by the technician, in the learning mode of the device (1),
the computer unit (5) being configured to:
- receive data from the sensor (7) in the learning mode;
- translate said data into torques applied at said motor(s) (32) of the robotic arm (3) in the learning mode;
- generate instructions for attenuating the applied torques,
- drive said motor(s) (32) of the robotic arm (3) with the attenuation instructions when the tool (4) is moved by the technician in the learning mode, in order to limit a braking effect of a resistance torque of the motors (32) against the movement of the tool (4) by the technician in the learning mode.

2. Device (1) according to claim 1, **characterized in that,** in the automatic mode, the computer unit (5) is configured to:
- generate a work program comprising at least one trajectory of the tool (4), from data received from the sensor (7) and/or positions of the motors (32) of the robotic arm (3), in the learning mode;
- drive said motor(s) (32) of the robotic arm (3) with said work program.

3. Device (1) according to the preceding claim, **characterized in that** the computer unit (5) is configured to execute a reproduction of the movement of the tool (4) at a speed identical to that applied by the technician in the learning mode.

4. Device (1) according to claim 2, **characterized in that** the computer unit is configured to smooth the movement speed of the tool (4) by the robotic arm (3) according to a constant target speed.

5. Device (1) according to claim 2, **characterized in that** the computer unit (5) is configured to increase the movement speed of the tool (4) when the tool (4) is in an inactive state.

6. Device (1) according to any of claims 2 to 5, **characterized in that** the computer unit (5) is configured to smooth the trajectories of the work program.

7. Device (1) according to any of the preceding claims,
**characterized in that** the tool (4) is a welding torch.

8. Device (1) according to the preceding claim, **characterized in that** the welding torch has a tube (42) inside which a welding wire guide (44) is inserted.

9. Device (1) according to the preceding claim, **characterized in that** the wire guide (44) is inserted with clearance into the tube (42).

10. Device (1) according to either claim 8 or claim 9, **characterized in that** the welding torch comprises a handle (41) extended at one of the ends thereof by the tube (42), the second part (61) of the joint (6) being mounted at the junction between the handle (41) and the tube (42).

11. Device (1) according to any of claims 7 to 10, **characterized in that** the welding torch comprises at least one double-contact button (46) including:
- an initial contact for authorizing welding;
- a second contact for controlling the computer unit (5) and generating the work program.

12. Device (1) according to any of the preceding claims,
**characterized in that** it comprises a panel (8) for setting parameters of the tool (4), the computer unit (5) being coupled to the setting panel (8) and configured to take into account data from the setting panel (8) and to generate the attenuation instructions and the work program.

13. Device (1) according to any of the preceding claims, **characterized in that** the computer unit (5) is also configured to generate applied torque attenuation instructions which it sends back to the motors (32) of the robotic arm (3) in order to drive the latter as soon as the sensor (7) detects a deformation of the flexible connection (63) when the tool (4) is moved by the technician in the learning mode.
